**Europäisches Patentamt**

**European Patent Office**

**Office européen des brevets**

(11) Veröffentlichungsnummer: **0 441 101 A1**

## (12) EUROPÄISCHE PATENTANMELDUNG

(21) Anmeldenummer: **90811035.6**

(22) Anmeldetag: **27.12.90**

(51) Int. Cl.$^5$: **C01G 31/00**, C09C 1/00,
C09C 1/02, C09C 1/04

(30) Priorität: **11.01.90 US 463639**

(43) Veröffentlichungstag der Anmeldung:
**14.08.91 Patentblatt 91/33**

(84) Benannte Vertragsstaaten:
**BE DE ES FR GB IT NL**

(71) Anmelder: **CIBA-GEIGY AG**
**Klybeckstrasse 141**
**CH-4002 Basel(CH)**

(72) Erfinder: **Sullivan, Robert M.**
**512 South Wade Avenue**
**Washington, PA 15031(US)**

(54) **Phosphat-modifizierte Wismuthvanadat-Pigmente.**

(57) Verbindungen der allgemeinen Formel

$$(Bi,E)(V,P,G)O_4 \qquad (I) ,$$

worin E ein Erdalkalimetall, Zink oder Mischungen davon und G Molybden, Wolfram, Niob oder Mischungen davon bedeuten, wobei der molare Austausch von Bi durch E Null bis 40 %, von V durch P 5 bis 50 % und von V durch G Null bis 40 % beträgt. Es handelt sich um Pigmente mit verbesserten coloristischen Eigenschaften und erhöhter Beständigkeit gegen den chemischen Angriff.

EP 0 441 101 A1

## PHOSPHAT-MODIFIZIERTE WISMUTHVANADAT-PIGMENTE `

Wismuthvanadate und substituierte Wismuthvanadate sind z.B. aus den US-PS 4 115 141 und 4 115 142 als gelbe Pigmente zum Färben von Kunststoffen und Lacken bekannt. Eine ganze Reihe von Ausfällungs- und Feststoffreaktionen zur Herstellung von Wismuthvanadaten und artgleicher Verbindungen ist schon beschrieben worden. Gottlieb et al., Therm. Anal. Fourth ICTA, Budapest 1, 675-679 (1974), haben z.B. noch vor der Entdeckung der obenerwähnten Pigmenteigenschaften die Synthese von Wismuthvanadaten im Feststoffverfahren, wobei eine innige Mischung von Wismuth- und Vanadiumoxid 16 Stunden auf 800°C erhitzt wird, oder durch Fällungsmethoden, wobei Lösungen von Natriumvanadat und Wismuthnitrat bei bestimmten Konzentrationen, Temperaturen, pH und während bestimmten Zeiten miteinander zum Reagieren gebracht werden, beschrieben. Dementsprechend hatten bereits Roth et al., Amer. Mineral., 48, 1348-1356 (1963), Feststoffverfahren, bei denen Oxidgemische geheizt werden, beschrieben.

Aehnliche Methoden werden abwechselnd in DE-OS 3 315 850, DE-OS 3 315 851, US-PS 3 843 554 und US-PS 4 063 956 offenbart. Zudem beschreibt die US-PS 4 316 746 Wismuthvanadat/molybdat- und Wismuthvanadat/wolframat-Pigmente, wobei die ersten in einer kristallinen Phase mit scheelitartiger Struktur und die zweiten als Zweiphasenprodukte vorliegen.

Weitere Wismuthvanadat/molybdate und Wismuthvanadat/wolframate werden auch in US-PS 4 455 174 und DE-OS 3 221 338 als gelbe Pigmente beschrieben. Es handelt sich dabei um Mehrphasenprodukte, welche aus einer Wismuthvanadatphase und einer Wismuthmolybdat- und/oder Wismuthwolframatphase bestehen und die durch ein Verfahren hergestellt werden, bei dem eine ein Wismuthsalz, ein Vanadat und ein Molybdat enthaltende Lösung angesäuert, dann mit einer gegebenenfalls eine Wolframverbindung enthaltende alkalische Lösung behandelt wird, der ausgefallene feste Stoff abfiltriert, gewaschen, wenn nötig getrocknet und abschliessend bei Temperaturen zwischen 300 und 800°C behandelt wird.

Schliesslich beschreibt die US-PS 4 251 283 Pigmente auf Wismuthvanadatbasis, die durch Kalzinie-rung einer Mischung von $BiPO_4$, $V_2O_5$ und einem Erdalkali- oder Zinkoxid erhalten werden, worin das Molverhältnis $Bi_2O_3 : P_2O_5 = 1$ ist. Das Molverhältnis $Bi_2O_3 : V_2O_5$ wird durch das spezifische Metalloxid bestimmt.

Obwohl nach den beschriebenen Methoden eine ganze Reihe von Produkten mit guten Pigmenteigenschaften erhalten werden können, besteht immer noch der Wunsch nach Wismuthvanadat-Pigmenten mit noch verbesserten coloristischen Eigenschaften und erhöhter Beständigkeit gegen den chemischen Angriff.

Es wurden nun phosphatsubstituierte Wismuthvanadat-Verbindungen, bei denen Vanadium teilweise durch Phosphor und Wismuth gegebenenfalls teilweise durch Erdalkalimetalle oder Zink ersetzt sind, die überraschenderweise dem obenerwähnten Wunsch entsprechen.

Die vorliegende Erfindung betrifft demnach Verbindungen der allgemeinen Formel

$$(Bi,E)(V,P,G)O_4 \qquad (I) \; ,$$

worin E ein Erdalkalimetall, Zink oder Mischungen davon und G Molybden, Wolfram, Niob oder Mischungen davon bedeuten, wobei der molare Austausch von Bi durch E Null bis 40 %, von V durch P 5 bis 50 % und von V durch G Null bis 40 % beträgt.

Bevorzugt beträgt der molare Austausch von Bi durch E und von V durch G Null bis 30 % und von V durch P 5 bis 30 %. E ist bevorzugt Calcium und der molare Austausch von V durch G ist vorzugsweise Null. Besonders bevorzugte Systeme sind 80 Mol% $BiVO_4$ und 20 % $BiPO_4$ sowie 95 Mol% $BiVO_4$ und 5 Mol% Ca-Phosphat. Die (Bi,E)- und (V,P,G)-Bezeichnungen sind derart zu verstehen, dass Wismuth teilweise durch ein oder mehrere E-Kationen und Vanadium teilweise durch Phosphor und gegebenenfalls durch G-Kationen ersetzt werden.

Die erfindungsgemässen Pigmente können nach folgenden Kalzinierungsverfahren hergestellt werden. Es handelt sich um allgemein übliche Kalzinierungsmethoden, die in Fachkreisen wohl bekannt sind. Unter den geeigneten Verfahren zählt man die Feststoffreaktionen bei hohen Temperaturen ausgehend von den entsprechenden Metalloxiden und Phosphaten. Eine übliche Methode besteht, wie bereits erwähnt, darin, eine Mischung von Oxiden oder von irgendwelchen Salzen, die die entsprechenden Oxide durch thermische Zersetzung liefern, wie z.B. Carbonate, Nitrate, Oxalate, Hydroxide, usw., in dem für die gewünschte Zusammensetzung erforderlichen Verhältnis zu kalzinieren. Die Kalzinierungstemperaturen variieren zwischen 500 und 950°C. Die optimale Temperatur hängt von der Zusammensetzung der gewünschten Verbindung ab. Zur Erleichterung der Reaktion und zur Erhaltung eines homogenen Produktes sind höhere Temperaturen bevorzugt. Die kritische höchste Grenze für Kalzinierungstemperaturen liegt bei der Bildung einer flüssigen Phase.

Der Austausch mit Phosphor wird durch die Gegenwart eines monobasischen Ammoniumphosphats, eines monobasischen Alkalimetallphosphats, wie Natriumphosphat, oder eines Erdalkalimetallphosphats beigestellt. Natriumphosphat ist bevorzugt, weil das Alkali eine vollständige Umsetzung begünstigt und weil der Zusatz einer alkalischen Lösung im nachfolgenden Mahlvorgang damit vermieden wird. Bei Verwendung von Ammoniumphosphat erfordert der nachfolgende Mahlvorgang die Gegenwart einer alkalischen Lösung.

Nach Abschluss des Kalzinierungsvorganges werden die Produkte langsam abkühlen gelassen. Sie werden beispielsweise in 3 bis 24 Stunden auf Temperaturen von 200°C bis Raumtemperatur abgekühlt. Danach werden sie vom Ofen entnommen, wenn nötig noch auf Raumtemperatur abgekühlt und schliesslich einer Nassmahlung unterworfen. Es hat sich gezeigt, dass diese Mahlmethode Produkte mit besseren optischen Eigenschaften gewährleistet, als die Trockenmahlung. Die Nassmahlung kann z.B. in Kugel-, Perl- oder Sandmühlen vorgenommen werden. Im allgemeinen wird das kalzinierte Produkt vor der Nassmahlung einer Trockenzerkleinerung unterworfen. Nach Abschluss der Nassmahlung wird das Produkt abfiltriert, gewaschen und getrocknet, z.B. bei 100-130°C, und abschliessend noch trockengemahlen, beispielsweise in einer Hammermühle.

Ein weiterer Gegenstand der Erfindung ist somit ein Verfahren zur Herstellung von Verbindungen der Formel I, durch Vermischen eines Wismuth-III-Salzes mit einem Phosphat ausgewählt aus der Gruppe bestehend aus Alkalimetallphosphaten, Ammoniumphosphat und Erdalkalimetallphosphaten, Kalzinieren des Gemisches bei einer Temperatur zwischen 500 und 950°C, Abkühlen des kalzinierten Produktes und Nassmahlung desselben. Zweckmässig kann vor dem Kalzinieren auch ein Erdalkalimetallsalz, ein Zinksalz, ein Molybdat, ein Wolframat oder ein Niobat dem Gemisch zugesetzt werden.

Die erhaltenen Wismuthvanadate zeigen sehr gute Pigmenteigenschaften, insbesondere die brillante gelbe Farbe und eine hohe Farbstärke. Sie eignen sich ausgezeichnet zum Pigmentieren von hochmolekularen organischen Materialien, z.B. Celluloseethern und -estern, wie Ethylcellulose, Acetylcellulose und Nitrocellulose, Polyamiden bzw. Polyurethanen oder Polyestern, natürlichen Harzen oder Kunstharzen, insbesondere Harnstoff- und Melamin-Formaldehydharzen, Alkydharzen, Phenoplasten, Polycarbonaten, Polyphenylenoxiden, Polyolefinen, wie Polyethylen, Polypropylen und Polystyrol, Polyvinylchlorid, Polyacrylnitril, Polyacrylsäureester, Fluorpolymerisate, wie z.B. Polyfluorethylen, Polytrifluorchlorethylen oder Tetrafluorethylen/Hexafluorpropylen-Mischpolymerisat, ferner thermoplastische oder härtbare Acrylharze, Gummi, Casein, Silikon und Silikonharzen, einzeln oder in Mischungen (z.B. ABS). Die erwähnten hochmolekularen Verbindungen können als plastische Massen, Schmelzen oder in Form von Spinnlösungen, Lacken oder Druckfarben vorliegen.

Pigmenteigenschaften, wie z.B. die Beständigkeit gegen Hitze, Licht und chemischem Angriff können durch Beschichten der Pigmentteilchen mit einer anorganischen Schutzschicht, wie beispielsweise in den US-PS 3 370 971,3 639 133 und 4 046 588 beschrieben, noch verbessert werden. Zu diesem Zweck werden anorganische Substanzen, z.B. Aluminium-, Titan-, Antimon-, Cer-, Zirkon- oder Siliciumverbindungen oder Zinkphosphat oder Gemische davon auf die Pigmente ausgefällt. $SiO_2$- and $AlPO_4$-Beschichtungen sind bevorzugt. Diese Ausfällung kann in einer oder mehreren Stufen vorgenommen werden. Die Menge an Beschichtungsmittel beträgt zweckmässig 2 bis 40, bevorzugt 2 bis 20 und insbesondere 3 bis 10 Gew.%, bezogen auf das gesamte Gewicht des Pigments.

Zur Verbesserung bestimmter Pigmenteigenschaften können die erfindungsgemässen Produkte zusätzlich noch mit texturverbessernden Mitteln behandelt werden, beispielsweise mit langkettigen aliphatischen Alkoholen, Estern, Säuren oder deren Salzen, Aminen, Amiden, Wachsen oder harzartigen Substanzen, wie Abietinsäure, deren Hydrierungsprodukten, Estern oder Salzen, ferner mit nichtionogenen, anionischen oder kationischen oberflächenaktiven Mitteln.

Die nachfolgenden Beispiele erläutern die Erfindung.

Beispiel 1: 69,9 g Wismuthtrioxid, 21,9 g Vanadiumpentoxid und 8,2 g monobasisches Natriumphosphat-Monohydrat werden vermischt und 4 Stunden bei 700°C kalziniert. Das erhaltene kalzinierte Material wird nach dem Abkühlen in einer Kugelmühle einer Nassmahlung unterworfen, bis die gewünschte Pigmentpartikelgrösse erreicht ist. Das erhaltene Produkt wird gewaschen und getrocknet. Es handelt sich um eine feste Lösung aus 80 Mol% $BiVO_4$ und 20 Mol% $BiPO_4$ mit brillanter gelber Farbe.

Beispiel 2: Die in Beispiel 1 beschriebene Verfahrensweise wird mehrmals wiederholt mit der Ausnahme, dass verschiedene Mengen Calciumoxid vor der Kalzinierung zugesetzt werden. Es werden dadurch Wismuthvanadat/phosphat-Pigmente mit einem verschiedenen molaren Wismuthvanadat-Ersatz, das als Calciumphosphat angegeben ist (vgl. nachstehende Tabelle) hergestellt.

Die Pigmenteigenschaften werden durch Einreibung in einem Acrylharzlack und colorimetrische Bestim-

3

mung der Farbwerte bewertet. 22.8 g Trockenpigment und 100 g Lack werden jeweils zu einer Volltondrucktinte angerieben und aufgestrichen. Die in der nachstehenden Tabelle angegebenen Werte werden durch L, a, b - Farbmessungen bestimmt, wobei sich "L" auf die Helligkeit, "a" auf das Verhältnis Rot/Grün und "b" auf das Verhältnis Gelb/Blau beziehen. "+a" bedeutet rotstichig, "-a" grünstichig, "+b" gelbsti-chig und "-b" blaustichig.

| Mol% Ca-Phosphat | L | a | b |
|---|---|---|---|
| 0 | 81,3 | - 8,8 | +47,1 |
| 5 | 85,3 | -11,0 | +50,7 |
| 10 | 84,6 | -10,7 | +50,0 |
| 20 | 83,9 | -10,9 | +49,1 |
| 40 | 81,3 | - 9,2 | +44,4 |

Bei Verwendung von Salzsäure in einem üblichen Versuch zur Bestimmung der Beständigkeit gegen den Angriff von Säure zeigen die verschiedenen Pigmente dieses Beispiels ausgezeichnete Resultate.

**Patentansprüche**

1. Verbindungen der allgemeinen Formel

$$(Bi,E)(V,P,G)O_4 \quad (1) ,$$

worin E ein Erdalkalimetall, Zink oder Mischungen davon und G Molybden, Wolfram, Niob oder Mischungen davon bedeuten, wobei der molare Austausch von Bi durch E Null bis 40 %, von V durch P5 bis 50 % und von V durch G Null bis 40 % beträgt.

2. Verbindungen gemäss Anspruch 1 der Formel I, worin E Calcium bedeutet und der molare Austausch von V durch G Null ist.

3. Verbindungen gemäss Anspruch 1 enthaltend 80 Mol% $BiVO_4$ und 20 Mol% $BiPO_4$.

4. Verbindungen gemäss Anspruch 1 enthaltend 95 Mol% $BiVO_4$ und 5 Mol% Ca-Phosphat.

5. Verbindungen gemäss Anspruch 1, die mit einer anorganischen Schutzschicht umhüllt sind.

6. Verfahren zur Herstellung von Verbindungen der Formel I gemäss Anspruch 1 durch Vermischen eines Wismuth-III-Salzes mit einem Phosphat ausgewählt aus der Gruppe bestehend aus Alkalimetallphosphaten, Ammoniumphosphat und Erdalkalimetallphosphaten, Kalzinieren des Gemisches bei einer Temperatur zwischen 500 und 950° C, Abkühlen des kalzinierten Produktes und Nassmahlung desselben.

7. Verfahren gemäss Anspruch 6, dadurch gekennzeichnet, dass vor dem Kalzinieren ein Erdalkalimetallsalz, ein Zinksalz, ein Molybdat, ein Wolframat oder ein Niobat dem Gemisch zugesetzt wird.

8. Verfahren gemäss Anspruch 6, dadurch gekennzeichnet, dass das Phosphat Natriumphosphat ist.

9. Verfahren gemäss Anspruch 6, dadurch gekennzeichnet, dass das Phosphat Ammoniumphosphat ist und die Nassmahlung in Gegenwart einer alkalischen Lösung vorgenommen wird.

10. Mit einer Verbindung gemäss Anspruch 1 pigmentiertes hochmolekulares organisches Material.

11. Mit einer Verbindung gemäss Anspruch 5 pigmentiertes hochmolekulares organisches Material.

Europäisches
Patentamt

**EUROPÄISCHER
RECHERCHENBERICHT**

Nummer der Anmeldung

**EP 90 81 1035**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN, Band 012, Nr. 283 (C-518), 3. August 1988; & JP-A-63 061 080 (SHARP CORP.) 17-03-1988 * Zusammenfassung * | 1,3,6 | C 01 G 31/00 C 09 C 1/00 C 09 C 1/02 C 09 C 1/04 |
| | − − − | | |
| A | FR-A-2 438 074  (MONTEDISON) * Seiten 21,22 * & US-A-4 251 283 (Kat. D) | 1,2,6 | |
| | − − − − − | | |

| | RECHERCHIERTE SACHGEBIETE (Int. Cl.5) |
|---|---|
| | C 01 G C 09 C C 01 B |

Der vorliegende Recherchenbericht wurde für alle Patentansprüche erstellt

| Recherchenort | Abschlußdatum der Recherche | Prüfer |
|---|---|---|
| Den Haag | 16 April 91 | LIBBERECHT-VERBEECK |

KATEGORIE DER GENANNTEN DOKUMENTE
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus anderen Gründen angeführtes Dokument
-------------------------------------------------------------
& : Mitglied der gleichen Patentfamilie,
    übereinstimmendes Dokument